# EUROPÄISCHE PATENTANMELDUNG

(11) **EP 1 936 406 A2**
(43) Veröffentlichungstag der Anmeldung: **25.06.2008**
(21) Anmeldenummer: 07020371.6
(22) Anmeldetag: 18.10.2007
(51) Int. Cl.: G01V 8/20

(54) **Optischer Sensor**

(30) Priorität: 10.11.2006 DE 102006053002
(71) Anmelder: Leuze lumiflex GmbH + Co. KG, 82256 Fürstenfeldbruck (DE)
(72) Erfinder: Lohmann, Lutz, Dr., 82140 Olching (DE); Rohbeck, Volker, Dr., 85244 Röhrmoos (DE); Schauppel, Elmar, 86199 Augsburg (DE)
(74) Vertreter: Ruckh, Rainer Gerhard

(57) **Zusammenfassung**

Der erfindungsgemäße optische Sensor dient zur Erfassung von Objekten in einem Überwachungsbereich und umfasst einen Sendelichtstrahlen (2) emittierenden Sender (3), einen Empfangslichtstrahlen empfangenden Empfänger (4) sowie eine Auswerteeinheit, in welcher in Abhängigkeit der Empfangssignale am Ausgang des Empfängers (4) ein Objektfeststellungssignal generiert wird, dessen Signalzustände angeben, ob sich ein Objekt im Überwachungsbereich befindet oder nicht. Im optischen Sensor ist wenigstens ein zusätzliches Sensorelement zur Erfassung des Überwachungsbereichs und/oder eines weiteren Bereichs integriert. Mittels der Signale des zusätzlichen Sensorelements werden Zusatzinformationen über einen Objekteingriff in den Überwachungsbereich gewonnen.

## Beschreibung

Die Erfindung betrifft einen optischen Sensor gemäß dem Oberbegriff des Anspruchs 1.

Derartige optische Sensoren werden typischerweise im Bereich der Sicherheitstechnik und des Personenschutzes eingesetzt. Mit diesem optischen Sensor wird dann als Überwachungsbereich ein Gefahrenbereich an einer Maschine oder Anlage überwacht. Wird mittels des optischen Sensors ein Eindringen eines Objekts oder einer Person in den Gefahrenbereich registriert, so wird anhand des dadurch im optischen Sensor generierten Objektfeststellungssignals die Maschine oder Anlage abgeschaltet um eine Gefährdung von Personen oder Objekten auszuschließen.

Durch derartige optische Sensoren können somit mit hoher Sicherheit Gefahren für Personen vermieden werden. Jedoch bedingt eine durch den optischen Sensor bedingte Abschaltung der Maschine oder Anlage einen erheblichen Produktionsausfall.

Der Erfindung liegt die Aufgabe zugrunde einen optischen Sensor der eingangs genannten Art bereitzustellen, der hinsichtlich seiner Funktionalität erweitert ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und umfasst einen Sendelichtstrahlen emittierenden Sender, einen Empfangslichtstrahlen empfangenden Empfänger sowie eine Auswerteeinheit, in welcher in Abhängigkeit der Empfangssignale am Ausgang des Empfängers ein Objektfeststellungssignal generiert wird, dessen Signalzustände angeben, ob sich ein Objekt im Überwachungsbereich befindet oder nicht. Im optischen Sensor ist wenigstens ein zusätzliches Sensorelement zur Erfassung des Überwachungsbereichs und/oder eines weiteren Bereichs integriert. Mittels der Signale des wenigstens einen zusätzlichen Sensorelements werden Zusatzinformationen über einen Objekteingriff in den Überwachungsbereich gewonnen.

Ein wesentlicher Vorteil des erfindungsgemäßen optischen Sensors besteht darin, dass anhand der mit dem Sensorelement oder den Sensorelementen gewonnenen Zusatzinformationen ein erfolgter Objekteingriff in den Überwachungsbereich analysiert werden kann. Auf diese Weise können die Ursachen ermittelt werden, welche zu dem jeweiligen Objekteingriff führten.

Auf der Basis einer derartigen Analyse können dann insbesondere geeignete Gegenmaßnahmen getroffen werden, um unnötige Objekteingriffe in den Überwachungsbereich zu vermeiden.

Dies führt insbesondere bei Anwendungen des optischen Sensors im Bereich der Sicherheitstechnik und des Personenschutzes zu erheblichen Rationalisierungseffekten, da dort eine zu überwachende Maschine oder Anlage bei einem Objekteingriff in den jeweiligen Gefahrenbereich abgeschaltet wird. Durch Vermeidung unnötiger Abschaltungen kann die Produktivität der Maschine oder Anlage erheblich gesteigert werden.

Das oder die Sensorelemente sind dabei so angeordnet, dass mit diesen vorzugsweise der gesamte Überwachungsbereich erfasst wird, wodurch gewährleistet ist, dass dann mit dem oder den Sensorelementen die Ursache für einen Objekteingriff sicher erfasst werden kann.

Das oder jedes Sensorelement kann dabei als Ultraschallsensor ausgebildet sein, wobei mit diesem beispielsweise Distanzmessungen durchgeführt werden, um so ein Distanzprofil als Bild des Überwachungsbereichs zu erhalten.

Besonders vorteilhaft ist jedes Sensorelement als Kamera ausgebildet, mittels dessen Bilder des Überwachungsbereichs aufgenommen werden können. Dabei kann bei einem Objekteingriff im einfachsten Fall ein einzelnes Bild vom Überwachungsbereich aufgenommen werden. Besonders vorteilhaft wird auf einen Objekteingriff im Überwachungsbereich mit der Kamera eine Sequenz von Bildern des Überwachungsbereichs aufgenommen, wodurch detaillierbare Informationen über die Art des Objekteingriffs erhalten werden.

In jedem Fall werden bevorzugt die von dem wenigstens einen Sensorelement genierten Signale, insbesondere in Form von Bildern des Überwachungsbereichs, an eine externe Einheit, die von einer Leitzentrale gebildet sein kann, ausgelesen. In dieser Leitzentrale kann dann eine Auswertung dieser Signale erfolgen, um die Art des Objekteingriffs zu analysieren. Weiterhin kann in der Leitzentrale eine Archivierung dieser Daten zu Dokumentationszwecken erfolgen.

Zur Übertragung der Signale des Sensorelements an die externe Einheit können im optischen Sensor vorhandene Schnittstellen genutzt werden, die beispielsweise auch zur Übertragung des Objektfeststellungssignals oder zur Übertragung von Parameterwerten des optischen Sensors dienen. Alternativ können hierzu separate Schnittstellen vorgesehen sein. Die Übertragung der Signale der Sensorelemente kann dabei generell leitungsgebunden oder über eine Funkverbindung erfolgen.

Die Funktionalität des erfindungsgemäßen optischen Sensors kann vorteilhaft dahingehend erweitert sein, dass anhand der Signale des oder der Sensorelemente ein Warnsignal generiert wird. In diesem Fall wird bevorzugt auch ein Bereich außerhalb des Überwachungsbereichs mit dem oder der Sensorelemente überwacht, wobei dieser Bereich bevorzugt an den Überwachungsbereich angrenzt. Durch ein derartiges Warnsignal wird eine Vorwarnung vor einem Objekteingriff in den Überwachungsbereich erzielt. Vorteilhaft hierbei ist, dass bei Generierung eines Warnsignals bedingt durch ein Eindringen eines Objekts in den Bereich anders als bei einer Generierung eines Objektfeststellungssignals durch einen Objekteingriff in den Überwachungsbereich eine jeweils zu überwachende Maschine oder Anlage noch nicht abgeschaltet werden muss. Daher können bei einem vorliegenden Warnsignal noch beispielsweise durch das Bedienpersonal Maßnahmen getroffen werden, um ein Abschalten der Maschine oder Anlage noch zu verhindern.

Der erfindungsgemäße optische Sensor kann gemäß einer ersten Ausführungsform als Lichtgitter ausgebildet sein. Alternativ können der Sender und der Empfänger des optischen Sensors einen Distanzsensor bilden, wobei zur Durchführung der Distanzmessungen vorteilhaft ein Lichtlaufzeitverfahren eingesetzt werden kann, insbesondere ein Phasenmessverfahren oder ein Puls-Laufzeit-Verfahren. Besonders vorteilhaft ist ein derartiger optischer Sensor als Flächendistanzsensor ausgebildet. Die vom Sender emittierten Sendelichtstrahlen werden dann periodisch innerhalb eines flächigen Überwachungsbereichs geführt. Durch die mit dem Distanzsensor des optischen Sensors durchgeführten Distanzmessungen sowie die zusätzliche Bestimmung der aktuellen Ablenkrichtung der Sendelichtstrahlen kann die Position eines Objektes im Überwachungsbereich bestimmt werden. Durch eine geeignete Schwellwertbewertung der ermittelten Distanzwerte kann als Objektfeststellungssignal ein binäres Schaltsignal abgeleitet werden, dessen Schaltzustände angeben, ob sich im Objekt ein Überwachungsbereich befindet oder nicht.

Die Erfindung wird im Nachstehenden anhand der Zeichnungen erläutert. Es zeigen:
- Figur 1:: Ausführungsbeispiel eines Lichtgitters mit einer Sendereinheit und Empfängereinheit in getrennten Gehäusen.
- Figur 2:: Schematische Darstellung der Datenübertragung zwischen dem Lichtgitter gemäß Figur 1 und einer Leitzentrale.

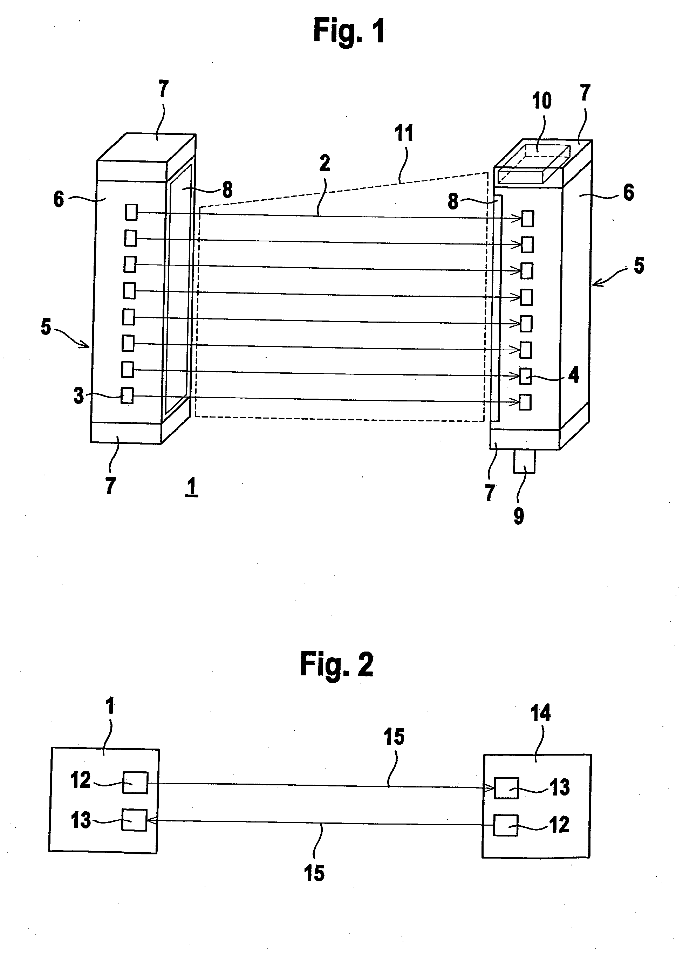

Figur 1 zeigt schematisch als Ausführungsbeispiel eines optischen Sensors ein Lichtgitter 1 zur Erfassung von Objekten in einem Überwachungsbereich. Das Lichtgitter 1 umfasst eine Anordnung von Sendelichtstrahlen 2 emittierenden Sendern 3, die mit einer nicht dargestellten Steuereinheit zyklisch einzeln nacheinander aktiviert werden. Die Empfängereinheit umfasst eine Anordnung von Empfängern 4 zum Empfang der Sendelichtstrahlen 2. Den Empfängern 4 ist eine ebenfalls nicht dargestellte Auswerteeinheit zur Steuerung des Empfängerbetriebs und zur Auswertung der an den Ausgängen anstehenden Empfangssignalen zugeordnet. Wie aus Figur 1 ersichtlich, sind die Sendereinheit und die Empfängereinheit in separaten Gehäusen 5 an gegenüberliegenden Rändern des Überwachungsbereichs angeordnet. Dabei ist jedem Sender 3 jeweils ein Empfänger 4 zugeordnet, so dass bei freiem Überwachungsbereich die vom Sender 3 emittierten Sendelichtstrahlen 2 auf den Empfänger 4 treffen. Bei einem Objekteingriff in den Überwachungsbereich wird der Strahlengang der Sendelichtstrahlen 2 wenigstens eines Senders 3 unterbrochen.

In Abhängigkeit der Empfängersignale des Empfängers 4 wird in der Auswerteeinheit als Objektfeststellungssignal ein binäres Schaltsignal generiert, dessen Schaltzustände angeben, ob sich ein Objekt im Überwachungsbereich befindet oder nicht. Im einfachsten Fall nimmt das Schaltsignal den Schaltzustand "freier Überwachungsbereich" ein, wenn keine der Sendelichtstrahlen 2 unterbrochen sind. Werden dagegen wenigstens die Sendelichtstrahlen 2 eines Senders 3 unterbrochen, nimmt das Schaltsignal den Schaltzustand "Objekt erkannt" ein, das heißt es liegt ein Objekteingriff im Überwachungsbereich vor. Das Lichtgitter 1 wird bevorzugt im Bereich des Personenschutzes eingesetzt. Um eine hierfür erforderliche fehlersichere Auswertung der Empfangssignale zu erzielen, weist die Auswerteeinheit einen redundanten Aufbau auf. Mit dem Lichtgitter 1 kann dann als Überwachungsbereich der Gefahrenbereich an einer Maschine zu Zwecken des Personenschutzes überwacht werden. Dabei wird die Maschine abgeschaltet, sobald mittels des Lichtgitters 1 ein Objekteingriff im Überwachungsbereich registriert wird.

Alternativ zu der Ausführungsform gemäß Figur 1 können die Sender 3 und Empfänger 4 auch in einem gemeinsamen Gehäuse 5 integriert sein, welches an einem Rand des Überwachungsbereichs angeordnet ist. Am gegenüberliegenden Rand des Überwachungsbereichs ist dann ein Reflektor angeordnet, wobei bei freiem Überwachungsbereich die von den Sendern 3 emittierten Sendelichtstrahlen 2 am Reflektor reflektiert und von dort auf die Empfänger 4 geführt sind.

Je nach Anwendungsfall kann das Lichtgitter 1 eine unterschiedliche Anzahl von Sendern 3 und Empfängern 4 aufweisen. Dementsprechend variieren auch die Höhen der Gehäuse 5.

Um eine möglichst einfache Variation der Gehäuse 5 durchführen zu können, besteht jedes Gehäuse 5 aus einem Hohlprofilkörper 6, welcher an seinen offenen Stirnseiten jeweils mit einer Verschlusskappe 7 verschlossen ist. Der Hohlprofilkörper 6 wird in Strangpresstechnik hergestellt und kann durch einfaches Zuschneiden in der gewünschten Länge hergestellt werden.

Wie aus Figur 1 ersichtlich, weist jedes Gehäuse 5 in einer Längsseite, welche die dem Überwachungsbereich zugewandte Frontseite des Lichtgitters 1 bildet, eine Öffnung auf, in welche ein Austrittsfenster 8 eingesetzt ist. Durch dieses Austrittsfenster 8 werden die Sendelichtstrahlen 2 geführt.

Wie aus Figur 1 weiter ersichtlich, steht von der Unterseite der unteren Verschlusskappe 7 des Gehäuses 5 der Empfängereinheit einer Steckerverbindung 9 hervor, über welche das Lichtgitter 1 an die Maschine angeschlossen ist. Über die leitungsgebundene Verbindung kann das Objektfeststellungssignal an die Maschine ausgegeben werden.

In der oberen Verschlusskappe 7 des Gehäuses 5 der Empfängereinheit des Lichtgitters 1 ist als Sensorelement eine Kamera 10 angeordnet. Diese Kamera 10 umfasst bevorzugt ein zeilenförmiges oder matrixförmiges Empfängerarray, beispielsweise in Form eines CMOS- oder CCD-Arrays. Zudem ist eine, nicht dargestellte geeignete Optik derart vorgesehen, dass mit dem Sichtfeld 11 der Kamera 10 der gesamte Überwachungsbereich erfasst werden kann. Alternativ können beispielsweise in mehreren Verschlusskappen 7 des Lichtgitters 1 Kameras 10 integriert sein, deren Sichtfelder sich derart ergänzen, dass mit diesen der Überwachungsbereich vollständig erfasst wird.

Die Kamera 10 wird bevorzugt von der Auswerteeinheit angesteuert. Dabei wird die Kamera 10 dann aktiviert, sobald ein Objekteingriff in den Überwachungsbereich erfolgt. Daraufhin wird mit der Kamera 10 eine Sequenz von Bildern vom Überwachungsbereich generiert. Diese Sequenz von Bildern wird an eine externe Einheit ausgelesen. Die entsprechende Anordnung zur Datenübertragung ist in Figur 2 schematisch dargestellt. Das Lichtgitter 1 mit der darin integrierten Kamera 10 weist eine erste Funkschnittstelle mit einem Funksender 12 und einem Funkempfänger 13 auf.

Die externe Einheit, die im vorliegenden Fall von einer Leitzentrale 14 gebildet ist, weist eine entsprechende Funkschnittstelle mit einem Funksender 12 und einem Funkempfänger 13 auf. Über die so gebildete Funkverbindung können bidirektional Funksignale 15 gesendet werden, wobei über diese Funkverbindung die Bilder der Kamera 10 drahtlos an die Leitzentrale 14 gesendet werden.

In der Leitzentrale 14 werden die Bilder der Kamera 10 zu Dokumentationszwecken archiviert. Alternativ oder zusätzlich kann in der Leitzentrale 14 eine Auswertung der Bilder erfolgen, beispielsweise um die Ursachen für die eweilige Objektmeldung zu analysieren.

Die Anordnung gemäß Figur 1 kann dahingehend erweitert sein, dass mit der Kamera 10 nicht nur der Überwachungsbereich, sondern ein an diesen angrenzenden Bereich als Vorwarnbereich erfasst wird. In diesem Fall erfolgt zusätzlich fortlaufend eine Bilderfassung des Vorwarnbereichs mit der Kamera 10, wobei die jeweils generierten Bilder in der Auswerteeinheit ausgewertet werden. Dabei wird bei einem Objekteingriff in den Vorwarnbereich ein Warnsignal generiert. Dieses kann über ein nicht dargestelltes Anzeigeelement am Lichtgitter 1 angezeigt werden. Alternativ oder zusätzlich kann das Warnsignal an die Steuerung der Maschine oder an die Leitzentrale 14 ausgelesen werden.

Mittels des Warnsignals wird eine Vorwarnung von einem bevorstehenden Objekteingriff in den Überwachungsbereich erhalten.

### Bezugszeichenliste

- (1): Lichtgitter
- (2): Sendelichtstrahlen
- (3): Sender
- (4): Empfänger
- (5): Gehäuse
- (6): Hohlprofilkörper
- (7): Verschlusskappe
- (8): Austrittsfenster
- (9): Steckerverbindung
- (10): Kamera
- (11): Sichtfeld
- (12): Funksender
- (13): Funkempfänger
- (14): Leitzentrale
- (15): Funksignale

## Patentansprüche

1. Optischer Sensor zur Erfassung von Objekten in einem Überwachungsbereich mit wenigstens einem Sendelichtstrahlen emittierenden Sender, wenigstens einem Empfangslichtstrahlen empfangenden Empfänger sowie einer Auswerteeinheit, in welcher in Abhängigkeit der Empfangssignale am Ausgang des Empfängers ein Objektfeststellungssignal generiert wird, dessen Signalzustände angeben, ob sich ein Objekt im Überwachungsbereich befindet oder nicht, **dadurch gekennzeichnet, dass** im optischen Sensor wenigstens ein zusätzliches Sensorelement zur Erfassung des Überwachungsbereichs und/oder eines weiteren Bereichs integriert ist, wobei mittels der Signale des zusätzlichen Sensorelements Zusatzinformationen über einen Objekteingriff in den Überwachungsbereich gewonnen werden.

2. Optischer Sensor nach Anspruch 1, **dadurch gekennzeichnet, dass** mittels des Sensorelements bei Vorliegen eines Objekteingriffs in den Überwachungsbereich ein Bild oder eine Sequenz von Bildern des Überwachungsbereichs generiert wird.

3. Optischer Sensor nach Anspruch 2, **dadurch gekennzeichnet, dass** das oder jedes Sensorelement eine Kamera (10) aufweist.

4. Optischer Sensor nach Anspruch 2, **dadurch gekennzeichnet, dass** das oder jedes Sensorelement ein Ultraschallsensor ist.

5. Optischer Sensor nach einem der Ansprüche 2 bis 4, **dadurch gekennzeichnet, dass** die mit dem Sensorelement generierten Bilder zur visuellen Bewertung eines Objekteingriffs im Überwachungsbereich dienen.

6. Optischer Sensor nach einem der Ansprüche 2 bis 4, **dadurch gekennzeichnet, dass** die mit dem Sensorelement generierten Bilder zur Auswertung und/oder Archivierung an eine externe Einheit ausgelesen werden.

7. Optischer Sensor nach Anspruch 6, **dadurch gekennzeichnet, dass** die Bilder über einen leitungsgebundenen Anschluss ausgelesen werden.

8. Optischer Sensor nach Anspruch 7, **dadurch gekennzeichnet, dass** die Bilder über eine Funkverbindung ausgelesen werden.

9. Optischer Sensor nach einem der Ansprüche 1 bis 8, **dadurch gekennzeichnet, dass** mit dem Sensorelement ein an den Überwachungsbereich angrenzender Bereich überwacht wird, wobei bei einem mittels des Sensorelements registrierten Objekteingriff in dem Bereich ein Warnsignal generiert wird.

10. Optischer Sensor nach einem der Ansprüche 1 bis 9, **dadurch gekennzeichnet, dass** dessen Sensorkomponenten mit dem Sensorelement in wenigstens einem Gehäuse (5) integriert sind.

11. Optischer Sensor nach Anspruch 10, **dadurch gekennzeichnet, dass** dessen Sensorkomponenten in einem Gehäuse (5) integriert sind, wobei der Sender (3) und der Empfänger (4) einen Distanzsensor bilden.

12. Optischer Sensor nach Anspruch 11, **dadurch gekennzeichnet, dass** dieser eine Ablenkeinheit aufweist, mittels derer die Sendelichtstrahlen (2) des Senders (3) periodisch innerhalb des Überwachungsbereichs geführt sind.

13. Optischer Sensor nach Anspruch 10, **dadurch gekennzeichnet, dass** dieser ein Lichtgitter (1) ist.

14. Optischer Sensor nach Anspruch 13, **dadurch gekennzeichnet, dass** das Lichtgitter (1) eine Sendereinheit und eine Empfängereinheit aufweist, welche in separaten Gehäusen (5) integriert sind, wobei in einem der Gehäuse (5) das Sensorelement integriert ist.

15. Optischer Sensor nach Anspruch 14, **dadurch gekennzeichnet, dass** das oder jedes Gehäuse (5) wenigstens einen Hohlprofilkörper (6) sowie wenigstens eine Verschlusskappe (7) zum Verschließen einer stirnseitigen Öffnung des Hohlprofilkörpers (6) aufweist, wobei das Sensorelement in der oder in einer der Verschlusskappen (7) integriert ist.
